# EUROPÄISCHE PATENTSCHRIFT

(11) **EP 2 960 135 B1**
(45) Veröffentlichungstag und Bekanntmachung des Hinweises auf die Patenterteilung: **05.04.2017**
(21) Anmeldenummer: 15001679.8
(22) Anmeldetag: 05.06.2015
(51) Int. Cl.: B62D 1/19, B62D 5/00

(54) **LENKSYSTEM**
STEERING SYSTEM
SYSTÈME DE DIRECTION

(30) Priorität: 25.06.2014 DE 102014009517
(43) Veröffentlichungstag der Anmeldung: 30.12.2015
(73) Patentinhaber: AUDI AG, 85045 Ingolstadt (DE)
(72) Erfinder: Wilding, Werner, DE - 85137 Walting (DE); Tuschkan, Alwin, DE - 85051 Ingolstadt (DE); Schulz, Benjamin, DE - 85114 Buxheim (DE); Lorenz, Stephan, DE - 80939 München (DE); Klinger, Thomas, DE - 85057 Ingolstadt (DE); Nagl, Martin, DE - 86643 Rennertshofen (DE); Pfeiffer, Ulrich, DE - 85123 Karlskron (DE); Koch, Tilo, DE - 85055 Ingolstadt (DE)
(74) Vertreter: Reichert, Thomas Klaus

(56) Entgegenhaltungen:
- DE-A1- 10 312 516
- JP-A- 2009 280 044
- US-A1- 2003 141 136

## Beschreibung

Die Erfindung betrifft ein elektrisches Lenksystem ohne mechanische Verbindung zu einem Lenkgetriebe mit den Oberbegriffsmerkmalen der Ansprüche 1 bzw. 5.

Mit Lenksäulenlaufen wird das Verschieben der Lenksäule im Crash-Fall bezeichnet und es wird passiv ausgelöst, wenn ein bestimmtes Kraftniveau überschritten wird, beispielsweise beim Aufprall des Fahrers auf Airbag/Lenkrad. Dabei wird bei heutigen Fahrzeugen Energie über definierte plastische Verformung speziell dafür vorgesehener Bauteile realisiert.

Ein Lenksystem der eingangs genannten Art ist aus der DE 602 02 074 T2 bekannt. Die Lenkeinheit für eine Steer-by-Wire-Lenkung umfasst Winkelabtastmittel, um die Winkelposition eines Lenkrads zu detektieren; Verarbeitungsmittel, die mit den Winkelabtastmitteln verbunden sind und mit einem Radpositionssensor verbunden sind, wobei der Radpositionssensor ein Ausgabesignal zur Verfügung stellt, das die Position der gelenkten Räder eines Fahrzeugs darstellt. Die Verarbeitungsmittel sind mit einer Lenkbetätigungseinrichtung verbunden, die mechanisch mit den gelenkten Rädern verbunden ist, wobei die Verarbeitungsmittel die Lenkbetätigungseinrichtung in Abhängigkeit von der Winkelposition des Lenkrads antreibt. Die Lenkeinheit hat ferner Reibungsmittel zum Bereitstellen einer Reibungskraft auf das Lenkrad, und die Verarbeitungsmittel sind ausgelegt, um die Reibungsmittel an variablen Endanschlägen zu betätigen.

Die DE 603 03 081 T2 betrifft ein Handradstellglied zum Bereitstellen einer Kraftrückkopplung an einen Benutzer, wobei das Stellglied eine Lenkwelle, die an dem Handrad befestigt und durch Lager gehalten ist, so dass sie um ihre eigene Achse herum drehbar ist, einen Positionssensor, der eine Winkelverschiebung der Lenkwelle von einem gewählten Ursprung detektiert und ein Signal erzeugt, das bezeichnend für die Winkelverschiebung ist, einen Elektromotor und ein Getriebe, das eine Ausgangswelle des Elektromotors mit der Lenkwelle wirksam verbindet, und einen variablen Anschlag umfasst, der eine Drehung der Lenkwelle an einer beliebigen Position stoppt.

Bei den bekannten Vorrichtungen wird als nachteilig empfunden, dass eigene Bauteile zur Aufnahme von Energie beim Lenkwellenlaufen erforderlich sind, dass die Auslösekraft mechanisch umgesetzt werden muss, was sich als schwierig erwiesen hat, und dass schließlich das Auslöseniveau unabhängig von Gewicht und Sitzposition des Fahrers immer gleich ist.

Ein gattungsgemäßes, sämtliche Merkmale des Oberbegriffs der Patentansprüche 1 und 5 aufweisendes Lenksystem ist in der DE 103 12 516 A1 offenbart. Weitere gattungsgemäße elektrische Lenksysteme ohne mechanische Verbindung zu einem Lenkgetriebe sind aus der JP 2009 280044 und der US 2003/141 136 A1 bekannt.

Es ist Aufgabe der Erfindung, eine Lenksystem mit elektrischer Lenkungen ohne mechanische Verbindung zu einem Lenkgetriebe anzugeben, bei dem im Falle eines durch einen Unfall bedingten Aufschlagen des Fahrers auf das Lenkrad ein Teil der Aufprall-Energie in dem Lenksystem mit einfachen Mitteln absorbiert wird.

Das elektrische Lenksystem ohne mechanische Verbindung zu einem Lenkgetriebe mit einem Lenkrad und einer Lenkwelle, die über eine Halterung an einem Kraftfahrzeug drehbar befestigt ist, umfasst dazu eine Verriegelungseinrichtung zur Verriegelung der Lenkwelle am Ende einer jeweiligen Drehung als Begrenzung einer Lenkwinkeleingabe. Das Lenksystem zeichnet sich dadurch aus, dass, die Verriegelungseinrichtung wenigstens einen von einem Steuergerät anzusteuernden und an der Lenkwelle einzurückenden Sperrriegel umfasst, der in einem Lenkwellengehäuse angeordnet ist, und dass der Sperrriegel in einem mit dem Lenkwellengehäuse drehfest verbunden Sperrriegelgehäuse angeordnet ist, und dass der Sperrriegel so angeordnet und positioniert ist, dass der Sperrriegel bei einer Relativbewegung des Sperrriegelgehäuses gegenüber dem Lenkwellengehäuse im Crash-Fall an dem Lenkwellengehäuse unter Verformung des Lenkwellengehäuses angreift. Dadurch wird die für Steer-by-Wire benötigte variable Verriegelungseinrichtung in vorteilhafter Weise genutzt, um beim Crash Energie beim Lenksäulenlaufen abzubauen.

Eine vorteilhafte Ausführung des erfindungsgemäßen Lenksystems ist dadurch gekennzeichnet, dass der Sperrriegel so angeordnet und positioniert ist, dass ein Teil des bei einem Crash einfahrenden Lenkwellengehäuses von dem Sperrriegel definiert aufgeschlitzt wird, wodurch in vorteilhafter Weise aufgrund der plastischen Verformung des Lenkwellengehäuses Energie abgebaut wird.

Eine weitere vorteilhafte Ausführung des erfindungsgemäßen Lenksystems ist dadurch gekennzeichnet, dass das Lenkwellengehäuse auf der Bewegungsbahn des Sperrriegels Perforationsbohrungen aufweist. Je nach Größe der Perforationsbohrungen und der Materialstärke in dem Bereich der Perforationsbohrungen kann so die Energiemenge verändert werden, die bei einem Crash-Fall aufgebraucht wird.

Eine weitere vorteilhafte Ausführung des erfindungsgemäßen Lenksystems, bei dem die Lenkwelle über Rollenlager an dem Lenkwellengehäuse gelagert ist, ist dadurch gekennzeichnet, dass an der Lenkwelle ein Bund angeordnet ist, der an einer dem Lenkrad zugewandten Seite von einem der Rollenlager ansteht, und dass das Lenkwellengehäuse einen Anschlagsbund aufweist, der an der dem Lenkrad abgewandten Seite des Rollenlagers ansteht. Bei diesem Ausführungsbeispiel des erfindungsgemäßen Lenksystems wird beim Lenksäulenlaufen das Lenkwellengehäuse mit der Lenkwelle mitgenommen, während das Sperrriegelgehäuse aufgrund seiner Verbauung in dem Bereich der Lenksäule durch karosseriefeste Bauteile daran gehindert wird, sich mit dem Lenkwellengehäuse mit zu bewegen, sodass das Lenkwellengehäuse deformiert bzw. aufgeschlitzt wird.

Eine alternative Ausführung des erfindungsgemäßen Lenksystems ist dadurch gekennzeichnet, die Verriegelungseinrichtung wenigstens einen von einem Steuergerät anzusteuernden und an der Lenkwelle einzurückenden Sperreigel umfasst, der in einem Lenkwellengehäuse angeordnet ist, und dass der Sperrriegel in einem mit dem Lenkwellengehäuse drehfest verbunden Sperrriegelgehäuse angeordnet ist, und dass der Sperrriegel so angeordnet und positioniert ist, dass der Sperrriegel bei einer Relativbewegung der Lenkwelle gegenüber dem Sperrriegelgehäuse im Crash-Fall an der Lenkwelle unter Verformung des Sperrriegels angreift. Auch bei diesem Lenksystem wird die für Steer-by-Wire benötigte variable Verriegelungseinrichtung in vorteilhafter Weise genutzt, um bei einem Zusammenstoß Energie beim Lenksäulenlaufen abzubauen.

Eine vorteilhafte Ausführung des erfindungsgemäßen Lenksystems ist dadurch gekennzeichnet, dass auf der Lenkwelle ein Anschlag für den Sperrriegel vorgesehen ist, und dass der Sperrriegel so angeordnet und zu positionieren ist, dass die bei einem Crash einfahrende Lenkwelle durch den Anschlag den Sperrriegel deformiert. Durch die unmittelbare Einwirkung des Anschlags an der Lenkwelle auf den Sperrriegel wird dieser unmittelbar deformiert, was zu einem vorteilhaften Abbau der Energie im Crash-Fall führt.

Eine weitere vorteilhafte Ausführung des erfindungsgemäßen Lenksystems ist dadurch gekennzeichnet, dass der Sperrriegel in einer zur Lenkwelle senkrechten Führungsbohrung in der Verriegelungseinrichtung in Achsrichtung der Führungsbohrung verschiebbar angeordnet ist. Durch diese Anordnung des Sperrriegels in dem Sperrriegelgehäuse ergibt sich ein maximaler Hebelarm für die Einwirkung der Kräfte von dem Sperrriegel auf das Lenkwellengehäuse.

Eine weitere vorteilhafte Ausführung des erfindungsgemäßen Lenksystems ist dadurch gekennzeichnet, dass eine erste Verriegelungseinrichtung zur Verriegelung der Lenkwelle am Ende einer Drehung in einer ersten Drehrichtung des Lenkrades und eine zweite Verriegelungseinrichtung zur Verriegelung der Lenkwelle am Ende einer Drehung in einer entgegengesetzten zweiten Drehrichtung des Lenkrades vorgesehen sind, und dass die Verriegelungseinrichtungen wahlweise zu betätigen sind. Damit können zwei unterschiedliche Kraftniveaus realisiert werden, je nachdem, ob nur ein Sperrriegel oder beide Sperrriegel eingefahren wird/werden. Dadurch lässt sich das Kraftniveau an Fahrergewicht und Fahrersitzposition anpassen, wodurch sich in bestimmten Fällen die Belastungen des Fahrers reduzieren lassen.

Eine weitere vorteilhafte Ausführung des erfindungsgemäßen Lenksystems ist dadurch gekennzeichnet, dass die Betätigung der Verriegelungseinrichtungen an das Auftreten eines Crash-Falls gekoppelt ist. Die Betätigung der Verriegelungseinrichtungen und damit der Abbau von Energie sind damit unabhängig von der direkten mechanischen Einwirkung auf das System, sondern kann auch durch unabhängige Sensoren festgestellt und ausgelöst werden.

Eine weitere vorteilhafte Ausführung des erfindungsgemäßen Lenksystems ist dadurch gekennzeichnet, dass die Betätigung der Verriegelungseinrichtungen an das Auslösen einer Airbag-Vorrichtung gekoppelt ist. Nachdem heutzutage Airbags in den Kraftfahrzeugen verbaut sind, kann diese dazu genutzt werden, auch die Verriegelungseinrichtung zum Abbau von Energie im Crash-Fall zu nutzen.

Eine weitere vorteilhafte Ausführung des erfindungsgemäßen Lenksystems ist gekennzeichnet durch je eine Solenoid zur Betätigung der Sperrriegel, wobei eine sichere und ausreichend schnelle Betätigung des Sperrriegels in und aus der eingerückten Stellung in das zugehörige Zahnrad oder aus dem zugehörigen Zahnrad erreicht werden kann.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

In den Zeichnungen bedeutet:
Fig. 1 eine schematische Schnittdarstellung eines Lenksystems gemäß einer Ausführungsform der Erfindung,
Fig. 2 eine Schnittdarstellung von einem Detail der Verriegelungsvorrichtung nach Fig.1, und
Fig. 3 eine Schnittdarstellung eines Lenksystems gemäß einer Ausführungsform der Erfindung.

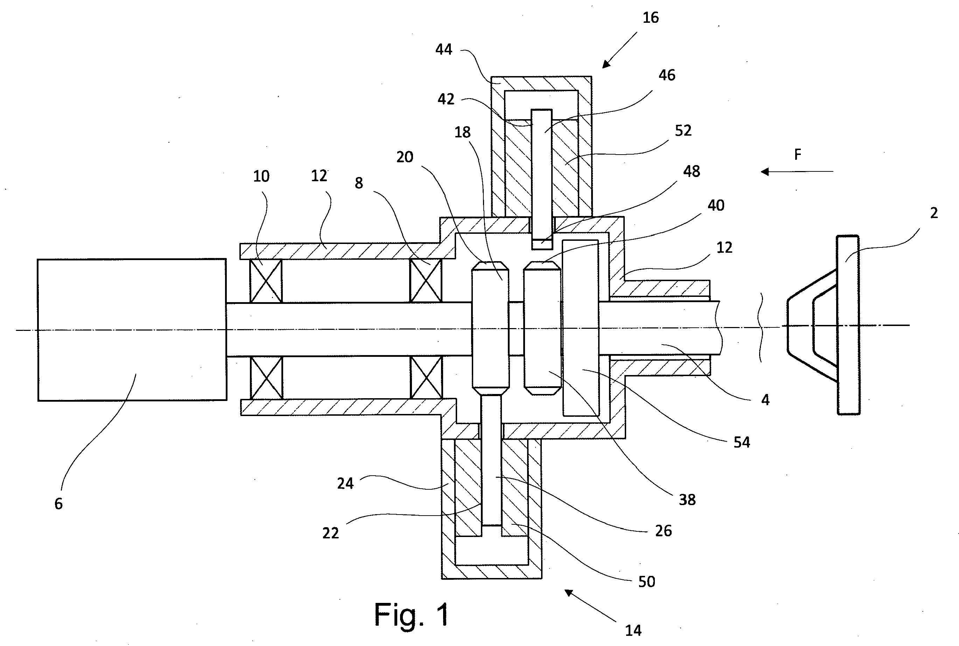

Fig. 1 zeigt den lenkradseitigen Teil einer elektrischen Lenkung mit einem Lenkrad 2, das über eine Lenkwelle 4 mit einer Rückmeldungseinrichtung 6 verbunden ist, die der Bedienungsperson ein Lenkgefühl vermitteln soll. Die Lenkwelle 4 ist über Lager 8, 10 an einem Lenkwellengehäuse 12 gelagert. Das Lenksystem umfasst ferner Verriegelungseinrichtungen 14, 16, wobei eine erste Verriegelungseinrichtung 14 zur Verriegelung der Lenkwelle 4 am Ende einer Drehung in einer ersten Drehrichtung des Lenkrades 2 und eine zweite Verriegelungseinrichtung 16 zur Verriegelung der Lenkwelle 4 am Ende einer Drehung in einer entgegengesetzten, zweiten Drehrichtung des Lenkrades 2 vorgesehen sind. Es wird hier nur die erste Verriegelungseinrichtung 14 im Detail beschrieben, da die zweite Verriegelungseinrichtung 16 entsprechend ausgeführt ist.

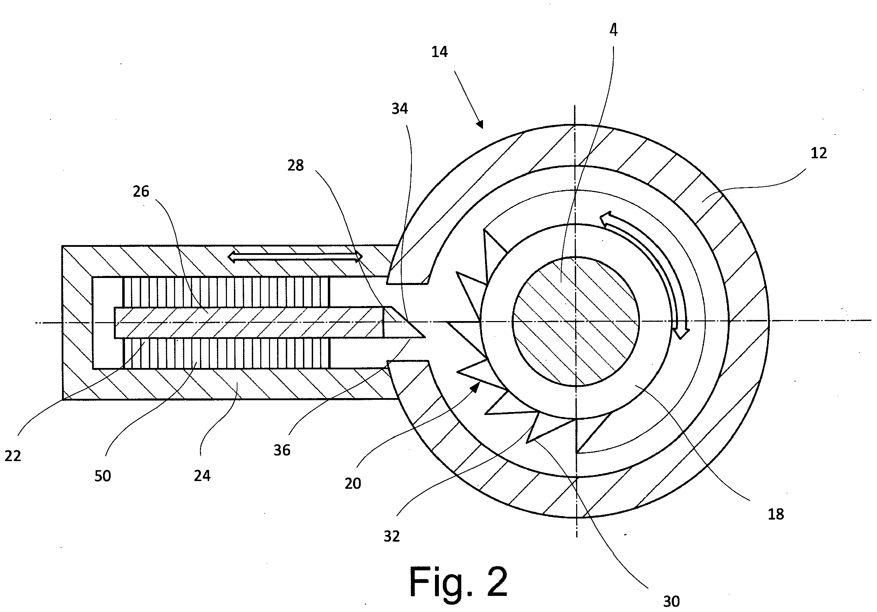

Die Verriegelungseinrichtung 14 umfasst gemäß Fig. 1 und Fig.2 ein Zahnrad 18 mit asymmetrischer Verzahnung 20, das an der Lenkwelle 4 befestigt ist. In einer zur Lenkwelle 4 senkrechten Führungsbohrung 22 in einem Sperrriegelgehäuse 24 der Verriegelungseinrichtung 14 ist ein Sperrriegel 26 mit einer asymmetrischen Gegenverzahnung 28 gelagert, so dass der Sperrriegel 26 in Achsrichtung der Führungsbohrung 22 verschiebbar ist. Zum Verriegeln wird der Sperrriegel 26 mit der Gegenverzahnung 28 des Zahnrades 18 in eine eingerückte Endlage vorgeschoben und stoppt somit formschlüssig die Drehbewegung in der gewünschten Richtung, wobei der Sperrriegel 26 sich über die Führungsbohrung 22 an dem Sperrriegelgehäuse 24 abstützt.

Wie aus Fig. 2 zu ersehen ist, hat die asymmetrische Verzahnung 20 an dem Zahnrad 18 eine flache Zahnflanke 30 und eine steile Zahnflanke 32 und die asymmetrische Gegenverzahnung 28 des Sperrriegels 26 hat ebenfalls eine flache Zahnflanke 34 und eine steile Zahnflanke 36. Die Zahnflanken sind so orientiert, dass jeweils eine flache Zahnflanke 30 an dem Zahnrad 18 einer flachen Zahnflanke 34 an dem Sperrriegel 26 gegenüberliegt, und dass jeweils eine steile Zahnflanke 32 an dem Zahnrad 18 einer steilen Zahnflanke 36 an dem Sperrriegel 26 gegenüberliegt. Bei einer Drehung der Lenkwelle 14 in der von der betreffenden Verriegelungseinrichtung nicht zu sperrenden Richtung wird der Sperrriegel 26 in die Führungsbohrung 14 eine ausgerückte Endlage zurückgedrückt.

Die Verriegelungseinrichtung 16 umfasst ebenfalls ein Zahnrad 38 mit asymmetrischer Verzahnung 40, das an der Lenkwelle 4 befestigt ist. In einer zur Lenkwelle 4 senkrechten Führungsbohrung 42 in einem Sperrriegelgehäuse 44 der Verriegelungseinrichtung 16 ist ein Sperrriegel 46 mit einer asymmetrischen Gegenverzahnung 48 gelagert, sodass der Sperrriegel 46 in Achsrichtung der Führungsbohrung 42 verschiebbar ist. Die Verriegelungseinrichtung 16 unterscheidet sich von der Verriegelungseinrichtung 14 dadurch, dass die flachen Zahnflanken und die steilen Zahnflanke der asymmetrischen Verzahnungen an dem Zahnrad und an dem Sperrriegel entgegengesetzt zu den flachen Zahnflanken und den steilen Zahnflanke der asymmetrischen Verzahnungen in der Verriegelungseinrichtung 14 orientiert sind.

Die Sperrriegel 26, 46 der beiden Verriegelungseinrichtungen 14, 16 werden in Sperrrichtung und in Freigaberichtung elektromechanisch durch Solenoide 50 bzw. 52 betätigt, die in den Führungsbohrungen 22 bzw. 42 in den Verriegelungseinrichtungen 14 bzw. 16 angeordnet sind. Somit kann die Betätigung der Sperrriegel 26, 46 an jeder Stelle des Umfanges der Zahnräder 18, 38 erfolgen.

Bei der Ausführungsform nach Fig. 1 ist auf der Lenkwelle 4 ein Anschlag 54 vorgesehen, der sich bei einer Krafteinwirkung in Richtung des Pfeils F beim Lenksäulenlauf in Fig. 1 nach links bewegt und somit auf den Sperrriegel 46, und in der Folge auf den Sperrriegel 26 auftrifft und den einen oder beide Sperrriegel deformiert. Dazu ist der Sperrriegel 46 so positioniert, dass er auch in dem ausgerückten Zustand, wie er bei der Verriegelungseinrichtung 16 gezeigt ist, in die Bewegungsbahn des Anschlags 54 hineinreicht. Im Falle des Sperrriegels 26, der bei der Verriegelungseinrichtung 14 in dem eingerückten Zustand gezeigt ist, ragt der Sperrriegel 26 noch weiter in die Bewegungsbahn des Anschlags 54, sodass im Crash-Fall wenigstens die Deformation des Sperrriegels 46 oder zusätzlich eine Deformation des Sperrriegels 26 oder sogar auch eine Deformation des Lenkwellengehäuses 12 zur Wirkung kommt.

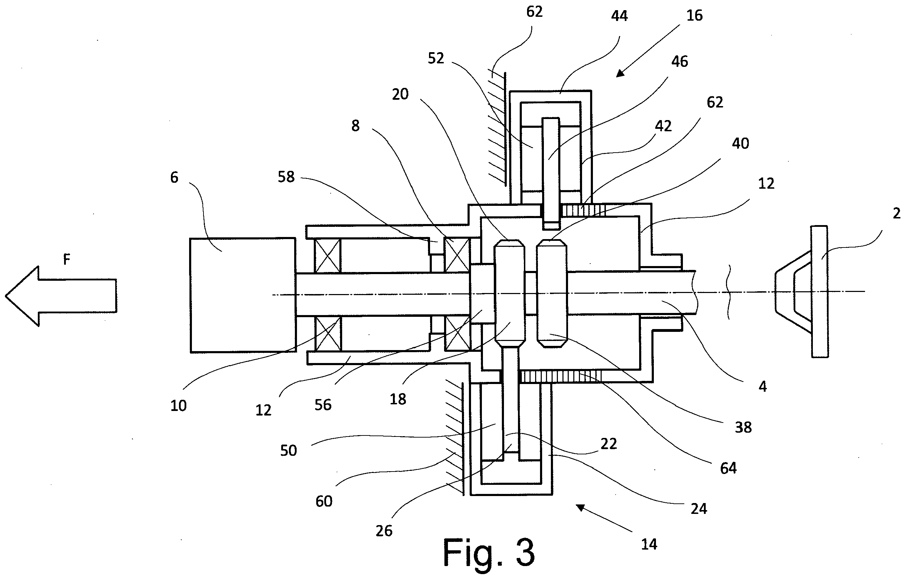

Im Folgenden wird das Ausführungsbeispiel der Erfindung gemäß Fig. 3 beschrieben, wobei Teile, die mit den Teilen des Ausführungsbeispiels von Fig. 1 übereinstimmen, die gleichen Bezugszeichen tragen.

Das zweite Ausführungsbeispiel nach Fig. 3 unterscheidet sich von dem ersten Ausführungsbeispiel nach Fig. 1 dadurch, dass der Sperrriegel 44 so angeordnet und positioniert ist, dass der Sperrriegel 44 bei einer Verschiebung des Lenkwellengehäuses 12 gegenüber dem Sperrriegelgehäuse 14 bzw. 16 im Crash-Fall an dem Lenkwellengehäuse 12 unter Verformung des Lenkwellengehäuses angreift. Im Crash-Fall bewegt sich die Lenksäule 4 mit einem Bund 56 in Richtung des Pfeils F nach links in Fig. 3, wobei der Bund 56 auf der dem Lenkrad 2 zugewandten Seite auf das Rollenlager 8 einwirkt und dieses auf dem Weg nach links mitnimmt.

Andererseits ist auf der Innenseite des Lenkwellengehäuses 12 ein Anschlagbund 58 vorgesehen, der bei der Bewegung der Lenkwelle 4 nach links von dem Rollenlager 8 mitgenommen wird. Der Bund 56 an der Lenkwelle 4, der an der dem Lenkrad 2 abgewandten Seite von dem Rollenlager 8 ansteht, und der Anschlagbund 58 an dem Lenkwellengehäuse 12, der an der dem Lenkrad 4 abgewandten Seite des Rollenlagers 8 ansteht, sorgen dafür, dass bei einer Bewegung der Lenkwelle 4 nach links das Lenkwellengehäuse 12 mitgenommen wird. Dadurch wird beim Lenksäulenlauf das Lenksäulengehäuse 12 mit der Lenkwelle 4 mitgenommen, während das Sperrriegelgehäuse 24, 44 aufgrund seiner Verbauung in dem Bereich der Lenksäule durch karosseriefeste, in Fig. 3 schematische gezeigte Bauteile 60, 62 daran gehindert wird, sich mit dem Lenkwellengehäuse 12 mit zu bewegen, sodass es zu einer Relativbewegung zwischen dem Lenkwellengehäuse 12 und dem Sperrriegelgehäuse 24, 44 kommt, mit der Folge, dass das Lenkwellengehäuse 12 deformiert bzw. aufgeschlitzt wird. Dabei sind an dem Lenkwellengehäuse 12 auf der Bewegungsbahn der Sperrriegel 26, 46 Perforationsbohrungen 64, 66 vorgesehen, durch die Energie, die beim Lenksäulenlauf abgebaut wird, je nach Durchmesser der Perforationsbohrungen 64, 66 und der Materialstärke des Lenkwellengehäuses 12 bei den Perforationsbohrungen 64, 66 eingestellt werden kann.

Den Ausführungsbeispielen der Erfindung gemäß den Figuren 1 und 3 ist gemeinsam, dass eine erste Verriegelungseinrichtung 14 zur Verriegelung der Lenkwelle 4 am Ende einer Drehung in einer ersten Drehrichtung des Lenkrades 2 und eine zweite Verriegelungseinrichtung 16 zur Verriegelung der Lenkwelle 4 am Ende einer Drehung in einer entgegengesetzten zweiten Drehrichtung des Lenkrades 2 vorgesehen sind, und dass die Verriegelungseinrichtungen 14, 16 wahlweise einzeln oder gemeinsam betätigt werden können, um bei einem Lenksäulenlauf Energie abzubauen.

In beiden Ausführungsbeispielen kann die Betätigung der. Verriegelungseinrichtungen 14, 16 an das Auftreten eines Crash-Falls gekoppelt sein. Insbesondere kann die Betätigung der Verriegelungseinrichtung 14, 16 an das Auslösen einer Airbag-Vorrichtung gekoppelt sein. Derartige Airbag-Auslösemechanismen sind bei einem Steuergerät, welches üblicherweise zur Steuerung einer Rückmeldeeinrichtung und der Verriegelungseinrichtungen verwendet wird, ohne großen zusätzlichen Aufwand möglich..

### Bezugszeichenliste

- 2: Lenkrad
- 4: Lenkwelle
- 6: Rückmeldungseinrichtung
- 8: Rollenlager
- 10: Rollenlager
- 12: Lenkwellengehäuse
- 14: Verriegelungseinrichtung
- 16: Verriegelungseinrichtung
- 18: Zahnrad
- 20: asymmetrische Verzahnung
- 22: Führungsbohrung
- 24: Sperrriegelgehäuse
- 26: Sperrriegel
- 28: asymmetrische Gegenverzahnung
- 30: flache Zahnflanke
- 32: steile Zahnflanke
- 34: flache Zahnflanke
- 36: steile Zahnflanke
- 38: Zahnrad
- 40: asymmetrische Verzahnung
- 42: Führungsbohrung
- 44: Sperrriegelgehäuse
- 46: Sperrriegel
- 48: asymmetrische Gegenverzahnung
- 50: Solenoid
- 52: Solenoid
- 54: Anschlag
- 56: Bund
- 58: Anschlagbund
- 60: Bauteil
- 62: Bauteil
- 64: Perforationsbohrungen
- 66: Perforationsbohrungen

## Patentansprüche

1. Elektrisches Lenksystem ohne mechanische Verbindung zu einem Lenkgetriebe mit einem Lenkrad (2) und einer Lenkwelle (4), die über eine Halterung an einem Kraftfahrzeug drehbar befestigt ist, umfassend eine Verriegelungseinrichtung (14, 16) zur Verriegelung der Lenkwelle (4) am Ende einer jeweiligen Drehung als Begrenzung einer Lenkwinkeleingabe, **dadurch gekennzeichnet, dass** die Verriegelungseinrichtung (14, 16) wenigstens einen von einem Steuergerät anzusteuernden und an der Lenkwelle (4) einzurückenden Sperrriegel (26, 46) umfasst, der in einem Lenkwellengehäuse (12) angeordnet ist, und dass
der Sperrriegel (26, 46) in einem mit dem Lenkwellengehäuse (12) drehfest verbundenen Sperrriegelgehäuse (24, 44) angeordnet ist, und dass
der Sperrriegel (26, 46) so angeordnet und positioniert ist, dass der Sperrriegel (26, 46) bei einer Relativbewegung des Sperrriegelgehäuses (24, 44) gegenüber dem Lenkwellengehäuse (12) im Crash-Fall an dem Lenkwellengehäuse (12) unter Verformung des Lenkwellengehäuses (12) angreift.

2. Lenksystem nach Anspruch 1, **dadurch gekennzeichnet, dass** der Sperrriegel (26, 46) so angeordnet und positioniert ist, dass ein Teil des bei einem Crash einfahrenden Lenkwellengehäuses (12) von dem Sperrriegel (26, 46) definiert aufgeschlitzt wird.

3. Lenksystem nach Anspruch 2, **dadurch gekennzeichnet, dass** das Lenkwellengehäuse (12) auf der Bewegungsbahn des Sperrriegels (26, 46) Perforatiönsbohrungen (64) aufweist.

4. Lenksystem nach Anspruch 1, wobei die Lenkwelle (4) über Rollenlager an dem Lenkwellengehäuse (12) gelagert ist, **dadurch gekennzeichnet, dass** an der Lenkwelle (4) ein Bund (56) angeordnet ist, der an einer dem Lenkrad (2) zugewandten Seite von einem der Rollenlager (8) ansteht, und dass das Lenkwellengehäuse (12) einen Anschlagsbund (58) aufweist, der an der dem Lenkrad (2) abgewandten Seite des Rollenlagers (8) ansteht.

5. Elektrisches Lenksystem ohne mechanische Verbindung zu einem Lenkgetriebe mit einem Lenkrad (2) und einer Lenkwelle (4), die über eine Halterung an einem Kraftfahrzeug drehbar befestigt ist, umfassend eine Verriegelungseinrichtung (14, 16) zur Verriegelung der Lenkwelle (4) am Ende einer jeweiligen Drehung als Begrenzung einer Lenkwinkeleingabe, **dadurch gekennzeichnet, dass** die Verriegelungseinrichtung (14, 16) wenigstens einen von einem Steuergerät anzusteuernden und an der Lenkwelle (4) einzurückenden Sperrriegel (26, 46) umfasst, der in einem Lenkwellengehäuse (12) angeordnet ist,
und dass der Sperrriegel (26, 46) in einem mit dem Lenkwellengehäuse (12) drehfest verbundenen Sperrriegelgehäuse (24, 44) angeordnet ist, und dass
der Sperrriegel (26, 46) so angeordnet und positioniert ist, dass der Sperrriegel (26, 46) bei einer Relativbewegung der Lenkwelle (4) gegenüber dem Sperrriegelgehäuse (24, 44) im Crash-Fall an der Lenkwelle (4) unter Verformung des Sperrriegels (26, 46) angreift.

6. Lenksystem nach Anspruch 5, **dadurch gekennzeichnet, dass** auf der Lenkwelle (4) ein Anschlag (54) für den oder die Sperrriegel (26, 46) vorgesehen ist, und dass der Sperrriegel (26, 46) so ausgelegt ist, dass die bei einem Crash einfahrende Lenkwelle (4) durch den Anschlag den Sperrriegel (26, 46) deformiert.

7. Lenksystem nach Anspruch 1 oder 5, **dadurch gekennzeichnet, dass** der Sperrriegel (26, 46) in einer zur Lenkwelle (4) senkrechten Führungsbohrung (22, 42) in der Verriegelungseinrichtung (14, 16) in Achsrichtung der Führungsbohrung (22, 42) verschiebbar angeordnet ist.

8. Lenksystem nach einem der Ansprüche 1, 5 oder 7, **dadurch gekennzeichnet, dass** eine erste Verriegelungseinrichtung (14) zur Verriegelung der Lenkwelle (4) am Ende einer Drehung in einer ersten Drehrichtung des Lenkrades (2) und eine zweite Verriegelungseinrichtung (16) zur Verriegelung der Lenkwelle (4) am Ende einer Drehung in einer entgegengesetzten zweiten Drehrichtung des Lenkrades (2) vorgesehen sind, und dass die Verriegelungseinrichtungen (14, 16) wahlweise betätigbar sind.

9. Lenksystem nach Anspruch 8, **dadurch gekennzeichnet, dass** die Betätigung der Verriegelungseinrichtungen (14, 16) an das Auftreten eines Crash-Falls gekoppelt ist.

10. Lenksystem nach Anspruch 9, **dadurch gekennzeichnet, dass** die Betätigung der Verriegelungseinrichtungen (14, 16) an das Auslösen einer Airbag-Vorrichtung gekoppelt ist.

11. Lenksystem nach Anspruch 1, **gekennzeichnet durch** je ein Solenoid (50, 52) zur Betätigung der Sperrriegel (26, 46).

## Claims

1. Electric steering system without mechanical connection to a steering gearbox having a steering wheel (2) and a steering shaft (4), which is rotatably mounted to a motor vehicle via a bracket, comprising a locking device (14, 16) configured to lock the steering shaft (4) on conclusion of a respective rotation as limitation of a steering angle input, **characterised in that** the locking device (14, 16) comprises at least one locking bar (26, 46) arranged in a steering shaft housing (12) configured for control by a control device and for engagement in the steering shaft (4)
and **in that**
the locking bar (26, 46) is arranged in a locking bar housing (24, 44) that is connected in fixed rotative engagement with the steering shaft housing (12), and **in that**
the locking bar (26, 46) is arranged and positioned such that the locking bar (26, 46) impacts the steering shaft housing (12), when the locking bar housing (24, 44) moves in relation to the steering shaft housing (12) in the event of a crash and deforms the steering shaft housing (12).

2. Steering system according to Claim 1, **characterised in that** the locking bar (26, 46) is arranged and positioned such that a part of the steering shaft housing (12), when collapsing as a result of the crash, is split by the locking bar (26, 46) in a defined manner.

3. Steering system according to Claim 2, **characterised in that** the steering shaft housing (12) has perforations (64) along the movement path of the locking bar (26, 46).

4. Steering system according to Claim 1, wherein the steering shaft (4) is mounted on the steering wheel housing (12) via rolling-contact bearings, **characterised in that** a collar (56) is arranged on the steering shaft (4), which is disposed on a steering wheel (2) proximate side of one of the rolling-contact bearings (8), and **in that** the steering shaft housing (12) has a stop collar (58) disposed on the steering wheel (2) distal side of the one of the rolling-contact bearings. (8).

5. Electric steering system without mechanical connection to a steering gearbox having a steering wheel (2) and a steering shaft (4), which is rotatably mounted to a motor vehicle via a bracket, comprising a locking device (14, 16) configured to lock the steering shaft (4) on conclusion of a respective rotation as limitation of a steering angle input, **characterised in that**
the locking device (14, 16) comprises at least one locking bar (26, 46) arranged in a steering shaft housing (12) configured for control by a control device and for engagement in the steering shaft (4)
and **in that**
the locking bar (26, 46) is arranged in a locking bar housing (24, 44) that is connected in fixed rotative engagement with the steering shaft housing (12),
and **in that**
the locking bar (26, 46) is arranged and positioned such that the locking bar (26, 46) impacts the steering shaft (4), when the steering shaft (4) moves in relation to the locking bar housing (24, 44) in the event of a crash and deforms the locking bar (26, 46).

6. Steering system according to Claim 5, **characterised in that** on the steering shaft (4) a stop (54) is provided for the locking bar or bars (26, 46), and that the locking bar (26, 46) is configured such that the stop deforms the locking bar (26, 46) as the steering shaft (4) collapses in the event of a crash.

7. Steering system according to Claim 1 or 5, **characterised in that** the locking bar (26, 46) is arranged in a guide bore (22, 42) for movement in an axial direction of the guide bore (22, 42) which extends perpendicular to the steering shaft (4) in the locking device (14, 16).

8. Steering system according to any one of Claims 1, 5 or 7, **characterised in that** a first locking device (14) for locking the steering shaft (4) on conclusion of a rotation in a first rotational direction of the steering wheel (2) and a second locking device (16) for locking the steering shaft (4) on conclusion of a rotation in an opposite second rotational direction of the steering wheel (2) are provided, and **in that** the locking devices (14, 16) can be selectively actuated.

9. Steering system according to Claim 8, **characterised in that** the actuation of the locking devices (14, 16) is dependent on the occurrence of a crash.

10. Steering system according to Claim 9, **characterised in that** the actuation of the locking devices (14, 16) is dependent on the deployment of an airbag.

11. Steering system according to Claim 1, **characterised by** a solenoid (50, 52) to actuate the locking bars (26, 46).

## Revendications

1. Système de direction électrique sans liaison mécanique vers un mécanisme de direction avec un volant de direction (2) et avec un arbre de direction (4) qui est fixé au niveau d'un véhicule automobile par l'intermédiaire d'une fixation et de manière à pouvoir tourner, comprenant un dispositif de verrouillage (14, 16) destiné à verrouiller l'arbre de direction (4) à la fin d'une rotation respective comme limitation d'une entrée d'angle de direction,
**caractérisé en ce que** le dispositif de verrouillage (14, 16) comprend au moins un verrou de blocage (26, 46) qui doit être commandé par un appareil de commande et être mis en prise au niveau de l'arbre de direction (4) et qui est agencé dans un carter d'arbre de direction (12)
et **en ce que** le verrou de blocage (26, 46) est agencé dans un carter de verrou de blocage (24, 44) assemblé de manière solidaire en rotation au carter d'arbre de direction (12)
et **en ce que** le verrou de blocage (26, 46) est agencé et positionné de telle sorte que, lors d'un mouvement relatif du carter de verrou de blocage (24, 44) par rapport au carter d'arbre de direction (12) en cas de collision, le verrou de blocage (26, 46) agit sur le carter d'arbre de direction (12) tout en déformant le carter d'arbre de direction (12).

2. Système de direction selon la revendication 1, **caractérisé en ce que** le verrou de blocage (26, 46) est agencé et positionné de telle sorte qu'une partie du carter d'arbre de direction (12) rentrant à l'intérieur lors d'une collision est fendue de manière définie par le verrou de blocage (26,46).

3. Système de direction selon la revendication 2, **caractérisé en ce que** le carter d'arbre de direction (12) présente des trous perforés (64) sur la trajectoire de déplacement du verrou de blocage (26, 46).

4. Système de direction selon la revendication 1, dans lequel l'arbre de direction (4) est logé au niveau du carter d'arbre de direction (12) par l'intermédiaire de paliers à rouleaux,
**caractérisé en ce qu'**un épaulement (56) est agencé au niveau de l'arbre de direction (4), lequel épaulement affleure au niveau d'un côté, proche du volant de direction (2), de l'un des paliers à rouleaux (8),
et **en ce que** le carter d'arbre de direction (12) comporte un épaulement de butée (58) qui affleure au niveau du côté, opposé au volant de direction (2), du palier à rouleaux (8).

5. Système de direction électrique sans liaison mécanique vers un mécanisme de direction avec un volant de direction (2) et avec un arbre de direction (4) qui est fixé au niveau d'un véhicule automobile par l'intermédiaire d'une fixation et de manière à pouvoir tourner, comprenant un dispositif de verrouillage (14, 16) destiné à verrouiller l'arbre de direction (4) à la fin d'une rotation respective comme limitation d'une entrée d'angle de direction,
**caractérisé en ce que** le dispositif de verrouillage (14, 16) comprend au moins un verrou de blocage (26, 46) qui doit être commandé par un appareil de commande et être mis en prise au niveau de l'arbre de direction (4) et qui est agencé dans un carter d'arbre de direction (12)
et **en ce que** le verrou de blocage (26, 46) est agencé dans un carter de verrou de blocage (24, 44) assemblé de manière solidaire en rotation au carter d'arbre de direction (12)
et **en ce que** le verrou de blocage (26, 46) est agencé et positionné de telle sorte que, lors d'un mouvement relatif de l'arbre de direction (4) par rapport au carter de verrou de blocage (24, 44) en cas de collision, le verrou de blocage (26, 46) agit sur l'arbre de direction (4) tout en déformant le verrou de blocage (26, 46).

6. Système de direction selon la revendication 5, **caractérisé en ce qu'**il est prévu sur l'arbre de direction (4) une butée (54) pour le ou les verrous de blocage (26, 46) et **en ce que** le verrou de blocage (26, 46) est conçu de telle sorte que l'arbre de direction (4) rentrant à l'intérieur lors d'une collision déforme le verrou de blocage (26, 46) via la butée.

7. Système de direction selon la revendication 1 ou 5, **caractérisé en ce que** le verrou de blocage (26, 46) est agencé dans un trou de guidage (22, 42) perpendiculaire à l'arbre de direction (4) dans le dispositif de verrouillage (14, 16) de manière à pouvoir être déplacé en translation dans la direction axiale du trou de guidage (22, 42).

8. Système de direction selon l'une des revendications 1, 5 ou 7, **caractérisé en ce qu'**un premier dispositif de verrouillage (14) est prévu pour verrouiller l'arbre de direction (4) à la fin d'une rotation dans un premier sens de rotation du volant de direction (2) et un deuxième dispositif de verrouillage (16) est prévu pour verrouiller l'arbre de direction (4) à la fin d'une rotation dans un deuxième sens de rotation contraire du volant de direction (2) et **en ce que** les dispositifs de verrouillage (14, 16) peuvent être activés à volonté.

9. Système de direction selon la revendication 8, **caractérisé en ce que** l'actionnement des dispositifs de verrouillage (14, 16) est couplé à l'apparition d'un cas de collision.

10. Système de direction selon la revendication 9, **caractérisé en ce que** l'actionnement des dispositifs de verrouillage (14, 16) est couplé au déclenchement d'un dispositif d'airbag.

11. Système de direction selon la revendication 1, **caractérisé par** un solénoïde (50, 52) à chaque fois afin d'actionner les verrous de blocage (26, 46).
